(19) Europäisches Patentamt
European Patent Office
Office européen des brevets

(11) EP 0 384 764 B1

(12) **EUROPEAN PATENT SPECIFICATION**

(45) Date of publication and mention of the grant of the patent:
**08.05.1996 Bulletin 1996/19**

(51) Int Cl.[6]: **G02F 1/015**

(21) Application number: **90301929.7**

(22) Date of filing: **22.02.1990**

(54) **Fabry-Perot modulator**

Fabry-Perot-Modulator

Modulateur type Fabry-Pérot

(84) Designated Contracting States:
**AT BE CH DE DK ES FR GB GR IT LI LU NL SE**

(30) Priority: **23.02.1989 GB 8904185**

(43) Date of publication of application:
**29.08.1990 Bulletin 1990/35**

(73) Proprietor: **BRITISH TELECOMMUNICATIONS public limited company**
**London EC1A 7AJ (GB)**

(72) Inventor: **Whitehead, Mark**
**London SW10 9AA (GB)**

(74) Representative: **Roberts, Simon Christopher et al**
**BT Group Legal Services,**
**Intellectual Property Department,**
**120 Holborn**
**London EC1N 2TE (GB)**

(56) References cited:
- **IEE PROCEEDINGS, vol. 136, no. 1, February 1989, pages 52-58; M. WHITEHEAD et al.: "Investigation of etalon effects in GaAs-AlGaAs multiple quantum well modulators"**
- **PATENT ABSTRACTS OF JAPAN, vol. 11, no. 62, (P-551)[2509], page 105 P 551, 25th February 1987 & JP-A-61 226 729**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 384 764 B1

## Description

This invention relates to Fabry-Perot modulators and in particular, but not exclusively, to those employing a multiple quantum well modulator.

Since the first observation of the effect of electric fields on the optical properties of GaAs-AlGaAs multiple quantum well (MQW) structures a number of optoelectronic devices have been demonstrated which exploit their enhanced electro-absorptive properties, e.g. fast intensity modulators and hybrid optical logic elements, both bistable and non-bistable. These devices employ an MQW layer grown epitaxially as the intrinsic region of a pin diode that can operate as an electro-absorptive modulator and efficient photodetector simultaneously.

A contrast ratio (on:off) of ≃2:1 has been observed in devices with only ≃ 1 µm of MQW absorber usually consisting of well and barriers ≃ 100Å thick. This is very efficient, given the device size, but a better contrast ratio is desirable. By 'contrast ratio' is meant the ratio of the high : low output states, irrespective of whether the device switches on or off with applied bias. 'Modulation' is the absolute change in state, which in reflection or transmission terms can only be between 0 and 1.

It would at first seem obvious simply to increase the thickness of the MQW layer to obtain better modulation figures. However, the situation is complicated by the background doping level of this layer which up to now has had a lower limit of ≃ $1x10^{15}$ $cm^3$ in the best available material, and is routinely two or three times this value. This causes a significant fall-off in the electric field across the intrinsic region of the pin device which broadens the absorption edge of the MQW material even at zero bias and, moreover, produces a different red shift of the excitonic absorption in each well as an external bias is applied to the device for modulation. As the bias is increased the absorption edge broadening becomes worse due to the roughly parabolic dependence of the edge shift on applied field. So, instead of producing a larger change in the intensity of a transmitted or reflected beam of light the increase in thickness of the absorbing layer might only serve to distribute absorption changes over a wider spectral region and leave the modulation at the operating wavelength relatively unaffected.

Optimisation calculations have shown that if the residual doping is $2x10^{15}/cm^3$ it is best to use about 45 wells of 100Å GaAs separated by barriers of 100Å $Al_{0.3}Ga_{0.7}As$ confirming the limit of around 1 µm for the total thickness.

A second problem with increasing the MQW thickness is the additional bias voltage required to induce a given change in absorption. This would also be the main disadvantage in using narrower quantum wells e.g. 60Å, where changes in absorption can be much greater because of the increased zero-bias exciton oscillator strength at the absorption edge and the greater resistance of the exciton to field-induced broadening, but the shift of the absorption edge with applied field is much reduced. It has been proposed that MQW devices may be integrated in 2-dimensional arrays with Si-based LSI electronics to form high-bandwidth optical interconnects, and in this case drive voltages for such modulators or logic gates will be limited to a few volts.

One method of improving modulation in a device that has limitations on its absorber thickness and drive voltage is to increase the effective optical path length by incorporating the MQW pin diode into a Fabry-Perot etalon.

EP-A-0249645 discloses an optoelectric voltage-controlled modulator which includes a reflector consisting of a layered semiconductor structure and an absorber epitaxially grown on the reflector structure such that the intensity of a light beam passing through the absorber before and after being reflected can be modulated by means of electric control signals. This modulator is unable to achieve the performance required of the present invention.

An asymmetric Fabry-Perot modulator has been proposed which operates as a reflection modulator with a low reflectivity front surface and a high reflectivity back surface (Whitehead M., Parry G. and Wheatley P. "Investigation of etalon effects in GaAs-AlGaAs multiple quantum well modulators", IEE Proceedings, Vol. 136, Pt.J,Nol, February 1989 pp 52-58).

Modelling of one such device demonstrated a maximum change in reflectivity of about 80%. However, it is desirable to have not only a large absolute change but to have a large modulation depth, or contrast ratio, i.e. the ratio of the maximum and minimum reflectivities. It is an object of the present invention to provide an asymmetric Fabry-Perot modulator having an improved contrast ratio.

Accordingly, there is provided in accordance with a first aspect of the invention a Fabry-Perot reflection modulator comprising a resonant cavity defined by a front reflector and a back reflector of different reflectivities, the cavity including an electro-absorptive means the absorption of which at a predetermined wavelength $\lambda$ can be increased by the application of a non-zero electrical bias signal, the reflectivity of the cavity being greatest with zero bias, the back reflector having a substantially greater reflectivity than the front reflector; characterised in that the cavity length is chosen such that a reflection resonance occurs at said wavelength $\lambda$; in that the front reflector has a reflectivity of between 0.3 and 0.45; and in that the reflectivity of the cavity at said wavelength $\lambda$ is a near-zero minimum with a certain applied bias signal, such that the ratio between the reflectivity with zero bias and that with said certain applied bias is at least 20 to 1.

According to a second aspect of the present invention, there is provided an asymmetric Fabry-Perot reflection modulator comprising a resonant cavity defined by a front reflector and a back reflector of different reflectivities and including an electro-absorptive means the absorption of which at a predetermined wavelength λ can be increased by the application of a non-zero electrical bias signal, the reflectivity of the cavity at said wavelength λ being switchable between a high value, with zero bias, and a low value, with a certain non-zero bias, characterised in that the cavity length is chosen such that a reflection resonance occurs at said wavelength λ, the reflectivity with said non-zero bias is no more than 0.00242.

According to a third aspect of the present invention, there is provided an asymmetric Fabry-Perot modulator comprising a resonant cavity defined by a front reflector and a back reflector of different reflectivities, the front reflector being defined by an interface which is devoid of effective anti-reflection structures, the rear reflector having a reflectivity substantially greater than that of the front reflector, the cavity including an electro-absorptive means whose absorption at a predetermined wavelength λ can be increased by the application of an electrical bias signal, the reflectivity of the cavity being greatest when unbiased, characterised in that the optical length of the resonant cavity is an odd multiple of λ/4.

According to a fourth aspect of the present invention, there is provided a method of modulating an optical signal of wavelength λ, which method includes the steps of:

(i) applying the optical signal to a first reflector of a Fabry-Perot modulator, which Fabry-Perot modulator comprises a resonant cavity defined by the first reflector and a second reflector, the second reflector having a reflectivity substantially greater than that of the first reflector, the cavity including an electro-absorptive means whose absorption can be increased by the application of an electrical bias signal, the reflectivity of the cavity being greatest when unbiased, the optical length of the resonant cavity being an odd multiple of λ/4; and

(ii) applying an information carrying bias signal to the modulator to cause the reflectivity of the cavity to vary, whereby the optical signal impinging on the first reflector gives rise to a reflected signal carrying information from said bias signal.

Unlike the high finesse reflection modulators previously mentioned, the present invention operates at a resonant wavelength which remains at a high reflection state at zero bias because of the asymmetric nature of the cavity, thus giving improved insertion loss compared to non-resonant devices. High contrast modulation is achieved according to the present invention by bias-tuning the electro-absorption means in the cavity to a critical value for substantially zero reflectivity.

The electro-absorptive means is preferably a multiple quantum well (MQW) structure and in particular a GaAs - AlGaAs MQW structure.

The cavity length is chosen so that a reflection resonance occurs a few nano-meters to the long wavelength side of the unbiased MQW absorption edge where the absorption coefficient, α, is initially low and the resonant reflection is high. The electro-absorption properties of the MQW can then be used to tune the cavity so that the reflection of the cavity, i.e. the reflectivity presented to an optical signal incident on the front surface of the cavity, is moved close to zero on application of the appropriate bias signal to the MQW. The thickness of the MQW structure may be ≤ 0.5 μm.

Preferably, the reflectivity of the front surface will be less than about 45% in order to obtain significant advantages over high-finesse MQW Fabry-Perot modulators in terms of insensitivity to deviation from the ideal surface reflectivities and to temperature effects on the absorption coefficient of the MQW. Conveniently the front surface is the untreated surface of the MQW modulator.

Embodiments of the invention will now be described by way of example only with reference to the accompanying drawings, in which:-

Figure 1 is a schematic diagram of a model Fabry-Perot modulator according to the present invention;
Figure 2 is a graph of the calculated biased and unbiased reflectivity of the embodiment of Figure 1;
Figure 3 is a graph of the calculated variation of contrast with input wavelength of the embodiment of Figure 1;
Figure 4 is a graph of the actual biased and unbiased reflectivity for a device conforming to the model embodiment of Figure 1;
Figure 5 is a graph of the calculated biased and unbiased reflectivity of the device of Figure 4 using the model structure of Figure 1; and
Figure 6 is a graph of three further simulated embodiments of the present invention.

Referring to Figure 1 there is shown a Fabry-Perot modulator 2 comprising a resonant cavity 4 defined by a front reflective surface 6 of reflectivity $R_f$ formed by the natural semiconductor surface and a back reflective surface 8 of reflectivity $R_b$. The cavity 4 is formed from a multiple quantum well pin diode having an AlGaAs $p^+$ region 10, a 100Å GaAs well 100Å $Al_{0.3}Ga_{0.7}As$ barrier intrinsic MQW region 12, and a single, 12-period multilayer back reflector stack 14 epitaxially grown on a GaAs $n^+$ substrate 16 with $R_f = 0.3$ and $R_b = 0.95$. Fewer periods will lower the back reflectivity, more will increase it, but the actual value of $R_f$ is also determined by the components of the stack by their relative refractive indices. The absorption coefficient of the MQW device can be altered by the application of a bias voltage in a known manner. The resonant MQW etalon modulator of Figure 1 was modelled in a simple way, with more emphasis on the electric field-induced absorption and refractive index changes in the MQW layer and the manner in which they combine with the properties of the basic resonant cavity, rather than considering in detail the subtleties of the multiple layers which may make up the cavity. For example, we have avoided multiple matrix-type calculations required to simulate the spectral reflectivity properties of dielectric stack mirrors. The main approximations made are

(a) Spectral dispersion and spatial variation of the zero-bias cavity refractive index are ignored. By 'spatial variation' we refer to the index of the different layers of GaAs and AlGaAs that may make up the cavity. A weighted mean index $n_m$ of 3.37 was calculated for the cavity at 850 nm, based on the effective AlGaAs content of a typical MQW pin structure and published experimental index data for this material and this was kept constant throughout. The justification for this is that in the small wavelength band which would be considered for device operation the spectral variation of the refractive index is so small that it has no significant effect on the modulation characteristics. Furthermore, as long as the calculated mean index lies somewhere between that of GaAs and AlGaAs at the operating wavelength, there is no effect on the magnitude of the modulation achievable with a cavity of given finesse. The effect of the change in index induced by an applied electric field is a much more important consideration.

(b) The cavity mirrors are assumed to be 'hard' reflectors, i.e. we ignore the finite thickness of the mirrors which would be used in a practical device, and assume all reflections to occur at the interfaces between the cavity material and the mirrors. These would probably consist of multiple quarter-wavelengths of dielectrics of different refractive indices (when high finesse is required), plasma-deposited (in the case of dielectrics) and could either be evaporated or epitaxially integrated, perhaps as the p and n regions of the pin structure. The specific details of how the front and back surface reflectivities are achieved are not critical to the calculations of the optimum device modulation properties.

(c) We have not included the linear electro-optic (LEO) effect, which we would expect to become comparable to the electro-refractive effect only at longer wavelengths, outside the region considered here. The polarisation dependence of the LEO contribution to modulation has recently been observed in a high-finesse device.

The cavity length of the Figure 1 arrangement is L, and is set at a value around 2.6µm, which places the F-P resonance in the wavelength region of interest and is also in keeping with typical epitaxial structure thicknesses. The MQW active layer is of thickness d, which we keep fixed at 0.96µm, taking into consideration field-induced broadening, as mentioned previously, and since this is the MQW thickness in the device which was used to determine electro-absorption, and hence, electro-refraction spectra. The use of a cavity length of 20 or any integer number of half-wavelengths is correct for the simulation as described by the equations above because it places the F-P resonance at the desired wavelength. When the figure 1 structure is modelled using full multi-layer matrix calculation methods then we find that in the case of the high finesse device (which would have another multilayer stack on top instead of the simple AlGaAs layer) the cavity thickness (length) L is defined only by the MQV thickness i.e. the MQV/MLS boundary defines the mirror reflection point. In this case the cavity thickness, L, must indeed be an integer number of 1/2 wavelengths (the operating wavelength). However, when modelling the asymmetric structure, the cavity is more likely defined by the total thickness of the MQW + AlGaAs top layer, and in this case, to put the F.P. resonance at the required wavelength, L must be an odd number of quarter wavelengths. Because of the asymmetry the cavity is subtly different from the high-finesse case, but the observation above has been confirmed by other workers with access to multi-layer simulation programs. For a cavity such as the one in Figure 1, with a mean refractive index $n_m$ and linear absorption $a$ (in the MQV region only), in the planewave approximation at normal incidence, the transmission T and reflection R are given by the following equations:

$$T = \frac{A}{(1 + F\sin^2\phi)} \qquad R = \frac{(B + F\sin^2\phi)}{(1 + F\sin^2\phi)}$$

where

$$F = \frac{4R_a}{(1 - R_a)^2} \qquad A = e^{-ad}\frac{(1-R_f)\ (1-R_b)}{(1 - R_a)^2}$$

$$B = R_f\,(1 - R_a/R_f)^2/(1-R_a)^2$$

and

$$R_a = (R_f R_b)e^{-ad} \qquad \phi = 2\pi\, n_m L/\lambda$$

$$\text{Cavity finesse} = (\pi/2)\, F^{1/2}$$

From room temperature photocurrent measurements on a MQV pin diode containing 100Å GaAs quantum wells, with 100Å $Al_{0.4}Ga_{0.6}As$ barriers, we previously determined electro-absorption spectra in the wavelength range 750-920 nm. By performing a Kramers-Krönig integral on this data we have obtained the corresponding spectra for electro-refraction. Because of the minimal changes in absorption outside the wavelength range 780-900 nm, we set these as the limits for the Kramers-Krönig integral. These spectra actually take into account possible contributions from the field-induced 'forbidden' transitions which occur above the MQV absorption edge at energies below the n = 2 subband edge and which begin to dominate the absorption spectra at high applied fields.

If we choose the cavity length so that a reflection resonance occurs a few nm to the long wavelength side of the unbiased MQW absorption edge, where $a$ is initially low, then the resonant reflection must remain high (with a maximum value of ≃0.83, when $a = 0$). The electro-absorptive properties of the MQW can then be used to tune the cavity so that R becomes as close as possible to zero. This requires the condition

$$ad = 0.5 \ln (R_b/R_f) \quad (1)$$

which, for our chosen reflectivities, means that $ad \simeq 0.58$. This is readily achievable in MQWs with little more than 1µm of 100A wells and barriers.

Figure 2 shows the 12 volt biased (off) and OV unbiased (on) reflectivity spectra for the device of Figure 1. In the unbiased spectrum the MQW light and heavy hole excitonic absorption can be seen as minima at ≃844nm and ≃851nm respectively. The cavity resonance appears rather indistinctly at ≃862nm, being strongly distorted by the rapid decrease of absorption with increasing wavelength in the region. The optimum operating wavelength is selected automatically in our calculation scheme to give the maximum contrast for a given upper limit on the insertion loss (in this case 3dB). Having found the optimum wavelength, the cavity length is set so as to put the cavity resonance at the wavelength. Separate multilayer reflectivity calculations have shown that the combined AlGaAs and MQW thickness must be an odd number of λ/4 to put the resonance at the required point as explained in some detail previously. The MQW thickness d is set arbitrarily at a value of 1.20µm, representing 60 periods of 100Å GaAs + 100Å $Al_{0.3}Ga_{0.7}As$. At a wavelength of 862.8nm the unbiased reflectivity is 0.552, with the biased reflectivity reduced to only 0.00242 - a contrast of 227:1 and an insertion loss of ≃2.6dB.

Figure 3 illustrates how the contrast varies with input wavelength for the fixed cavity length of 2.560µm. The modulation spectrum has a FWHM of ≃2nm. This compares favourably with ≃0.5nm or less for higher finesse symmetric cavities, in which it is actually more difficult to achieve very high contrast. This is because, in order to make the unbiased reflectivity approach zero, mirror reflectivities must be both high and very close to equal, if operating far from the MQW absorption edge, or accurately mismatched to account for unbiased cavity absorption.

With the device we have described here it is possible to vary the bias, and thus the absorption, to tune the reflectivity through a minimum over a range of wavelengths near the absorption edge. Thus errors in the position of the reflection resonance due to growth or design inaccuracies can be compensated for to some extent. A range of calculations show that, with optimisation of the bias voltage, contrasts of at least 20:1 can be achieved over the range 855 to 865nm with insertion loss decreasing to only 1.3dB at the longest wavelength.

Epitaxial integration of a back reflector stack within the MQW p-i-n structure is the most suitable way of fabricating the asymmetric Fabry-Perot modulator (AFPM) of Figure 1. In order to demonstrate the basic operating characteristics of the device, we first modified existing MQW p-i-n transmission modulators by applying a highly reflective gold coating to the back surface, leaving the natural semiconductor:air reflectivity at the front. This provides a thin asymmetric cavity (<3µm) close to the specification modelled above. The MQW structure was grown by MOVPE and contained 50x90Å GaAs quantum well with 60Å $Al_{0.3}Ga_{0.7}As$ barriers. The complete structure was in no way optimised, however the reflectivity modulation which was achieved was a significant improvement on previous results in terms of contrast per volt. Figure 4 shows the on:off spectra for the optimum bias of 7.6V. At 861nm the contrast is 6dB (4:1) and the insertion loss ≃2.4dB. Resonant reflective modulators containing 80-100 quantum wells, which have given contrasts up to 9dB have required more than twice the bias of the AFPM.

We find very good agreement between the experimental results and the modelled response of our test structure, which is displayed in figure 5. The contrast achieved is limited by there being insufficient MQW material in the cavity to satisfy equation (1), coupled with the F-P resonance being slightly too far away from the MQW absorption edge. The insertion loss at the resonant wavelength is higher than calculated, probably due to the absorption tail being underestimated.

An article by M.Whitehead, A. Rivers, G. Parry J.S. Roberts and C. Button, Electronics Letters Vol 25 No. 15, 20th July 1989 entitled "Low Voltage Multiple Quantum Well Reflection Modulator with on:off ratio > 100:1" reports the demonstration of a high contrast, low-voltage multiple quantum well reflection modulator according to the present invention comprising an expitaxially integrated asymmetric Fabry-Perot modulator having an active MQV layer and a semiconductor quarter wave reflector stack as the back mirror, the front mirror being simply defined by the semiconductor/air interface. This achieved a contrast ratio in excess of 100:1 at normal incidence with an insertion loss of about 3.5 dB and only 9V bias. Reflection changes of more than 40% were obtained over an optical bandwidth of 7nm.

Details of the specific structure and the fabrication processes and experimental are contained in the above article.

It has been suggested that MQW modulators would be an attractive interface device for optical interconnects between large scale electronic processors. We have carried out simulations to determined the prospects for an AFPM operating at no more than 5V bias, this being compatible with existing CMOS. Calculations indicate contrasts in excess of 20dB at 9-10V bias using the standard structure, which is in good agreement with experiment. Reducing the bias to 5V should still permit about 15dB contrast for an optimized device, where the resonant wavelength is moved closer to the MQW absorption edge. Furthermore, it should be possible to get 10dB contrast with only ≃ 3.3V at the upper limit of 3dB insertion loss.

It should be noted that all the calculations and experimental results have been for a device containing an MQW structure with 100Å GaAs wells and 60Å AlGaAs barriers. The AlGaAs barriers are optically inactive (only the wells absorb) and there is some scope for reducing their thickness further to ≃ 40Å in order to reduce the bias voltage for the device.

With the bias voltage fixed at 5V, the field across the MQW region falls with increasing thickness. For 0.5μm of MQWs, the field is high enough to induce a significant shift of the absorption edge, and so the contrast remains, quite uniform over the range. For thicker MQW regions there is only an improvement of the contrast at wavelengths close to the absorption edge, where the reduced electric field still has effect. The fall-off in contrast becomes more rapid with increasing MQW thickness (decreasing field). We note also that the loss is fairly insensitive both to operating wavelength and MQW thickness.

Other electro - absorptive materials can be used for example bulk GaAs or InP instead of the MQW they however require increased bias voltage for the necessarily thicker active layers. The Fabry-Perot configuration according to the present invention also has potential application as a wavelength-selective, high quantum efficiency photo-detector. For the AFPM, with bias at the resonant wavelength, what is not reflected is absorbed - and as $R_b$ is made closer to 1 (>0.95 anyway) the sum of T & R is only about 10% in this case and would be even less with optimisation. (In the high finesse structure in general what is not reflected is transmitted or vice versa). Experiments result confirming this. At ~865 nm, with bias, the photo current increases about 10-fold for the device of Figure 4.

**Claims**

1. A Fabry-Perot reflection modulator (2) comprising a resonant cavity (4) defined by a front reflector (6) and a back reflector (8) of different reflectivities, the cavity including an electro-absorptive means the absorption of which at a predetermined wavelength λ can be increased by the application of an electrical non-zero bias signal, the reflectivity of the cavity being greatest with zero bias, the back reflector having a substantially greater reflectivity than the front reflector; characterised in that the cavity length is chosen such that a reflection resonance occurs at said wavelength λ; in that the front reflector (6) has a reflectivity of between 0.3 and 0.45; and in that the reflectivity of the cavity at said wavelength λ is a near-zero minimum with a certain applied bias signal, such that the ratio between the reflectivity with zero bias and that with said certain applied bias is at least 20 to 1.

2. An asymmetric Fabry-Perot reflection modulator comprising a resonant cavity (4) defined by a front reflector (6) and a back reflector (8) of different reflectivities and including an electro-absorptive means the absorption of which at a predetermined wavelength λ can be increased by the application of a non-zero electrical bias signal, the reflectivity of the cavity at said wavelength λ being switchable between a high value, with zero bias, and a low value, with a certain non-zero bias, characterised in that the cavity length is chosen such that a reflection resonance occurs at said wavelength λ, the reflectivity with said non-zero bias is no more than 0.00242.

3. An asymmetric Fabry-Perot modulator comprising a resonant cavity (4) defined by a front reflector (6) and a back reflector (8) of different reflectivities, the front reflector (6) being defined by an interface which is devoid of effective anti-reflection structures, the rear reflector (8) having a reflectivity substantially greater than that of the front reflector (6), the cavity (4) including an electro-absorptive means whose absorption at a predetermined wavelength λ can be increased by the application of an electrical bias signal, the reflectivity of the cavity being greatest when unbiased, characterised in that the optical length of the resonant cavity (4) is an odd multiple of λ/4.

4. A modulator as claimed in any of the preceding claims, comprising a multiple quantum well structure.

5. A modulator as claimed in claim 4, comprising a GaAs - AlGaAs multiple quantum well structure.

6. A modulator as claimed in claim 5, comprising a plurality of 100Å GaAs well and 100Å $Al_{0.3}$ $Ga_{0.7}$ As barrier intrinsic regions.

7. A modulator as claimed in claim 5, comprising a plurality of 90Å GaAs well and 60Å $Al_{0.3}$ $Ga_{0.7}$ As barrier intrinsic regions.

8. A modulator as claimed in any one of claims 4 to 7, in which the multiple quantum well structure has barrier intrinsic regions ≤60Å thick.

9. A modulator as claimed in any one of claims 4 to 7, in which the multiple quantum well structure has barrier intrinsic regions ≤40Å thick.

10. A modulator as claimed in any one of claims 4 to 9, in which the multiple quantum well structure is ≤0.5μm thick.

11. A modulator as claimed in any preceding claim, including a multilayer back reflector stack epitaxially grown on a GaAs $n^+$ substrate.

12. A modulator as claimed in any one of claims 4 to 11, in which the front reflector (6) comprises a surface of the multiple quantum well structure.

13. A modulator as claimed in any of claims 4 to 12, in which the multiple quantum well structure is part of a pin diode.

14. A modulator as claimed in any preceding claim, in which the reflectivity of the front reflector (6) is less than 45%.

15. A method of modulating an optical signal of wavelength λ, which method includes the steps of:

(i) applying the optical signal to a first reflector (6) of a Fabry-Perot modulator (2), which Fabry-Perot modulator comprises a resonant cavity (4) defined by the first reflector (6) and a second reflector (8), the second reflector (8) having a reflectivity substantially greater than that of the first reflector (6), the cavity (4) including an electro-absorptive means whose absorption can be increased by the application of an electrical bias signal, the reflectivity of the cavity being greatest when unbiased, the optical length of the resonant cavity being an odd multiple of λ/4; and
(ii) applying an information carrying bias signal to the modulator to cause the reflectivity of the cavity to vary, whereby the optical signal impinging on the first reflector gives rise to a reflected signal carrying information from said bias signal.

16. A method according to claim 15, wherein the modulator is constructed in accordance with any of claims 1 to 14.

**Patentansprüche**

1. Fabry-Perot-Reflektionsmodulator (2) mit einem Hohlraumresonator (4), bestehend aus Frontreflektor (6) und Rückreflektor (8) mit unterschiedlichen Reflektivitäten, wobei der Hohlraum eine elektroabsorptive Vorrichtung beinhaltet, deren Absorption bei einer vorgegebenen Wellenlänge λ durch Anlegen eines elektrischen Vorspannungssignals ungleich Null erhöht werden kann, wobei die Reflektivität des Hohlraums am größten bei einer Vorspannung Null ist, wobei der Rückreflektor eine wesentlich größere Reflektivität als der Frontreflektor hat;

**dadurch gekennzeichnet, daß**
die Hohlraumlänge so gewählt ist, daß eine Reflektionsresonanz bei der besagten Wellenlänge λ auftritt;
der Frontreflektor (6) eine Reflektivität von zwischen 0,3 und 0,45 hat; und
die Reflektivität des Hohlraums bei der besagten Wellenlänge λ ein Minimum nahe Null bei einem bestimmten angelegten Vorspannungssignal hat, so daß das Verhältnis zwischen Reflektivität bei Vorspannung Null und der bei der besagten bestimmten Vorspannung wenigstens 20 zu 1 beträgt.

2. Asymmetrischer Fabry-Perot-Reflektionsmodulator mit einem Hohlraumresonator (4), bestehend aus einem Frontreflektor (6) und einem Rückreflektor (8) unterschiedlicher Reflektivitäten und beinhaltend eine elektro-absorptive Vorrichtung, deren Absorption bei vorgegebener Wellenlänge λ durch Anlegen eines elektrischen Vorspannungssignals ungleich Null erhöht werden kann, wobei die Reflektivität des Hohlraums bei der besagten Wellenlänge λ schaltbar zwischen einem hohen Wert bei Vorspannung Null und einem niedrigen Wert bei einer bestimmten Vorspannung ungleich Null ist, dadurch gekennzeichnet, daß die Hohlraumlänge so gewählt ist, daß eine Reflektionsresonanz bei der besagten Wellenlänge λ auftritt, wobei die Reflektivität bei der besagten Vorspannung ungleich Null nicht größer als 0,00242 ist.

3. Asymmetrischer Fabry-Perot-Modulator mit einem Hohlraumresonator (4), bestehend aus einem Frontreflektor (6) und einem Rückreflektor (8) unterschiedlicher Reflektivitäten, wobei der Frontreflektor (6) definiert wird durch eine Zwischenfläche, welche frei von effektiven Antireflektionsstrukturen ist, wobei der Rückreflektor (8) eine Reflektivität hat, die wesentlich größer als die des Frontreflektors (6) ist, wobei der Hohlraum (4) eine elektroabsorptive Vorrichtung beinhaltet, deren Absorption bei einer vorgegebenen Wellenlänge λ durch Anlegen eines elektrischen Vorspannungssignals erhöht werden kann, wobei die Reflektivität des Hohlraums am größten ist, wenn keine Vorspannung anliegt, dadurch gekennzeichnet, daß die optische Länge des Hohlraumresonators (4) ein ungradzahliges Vielfaches von λ/4 ist.

4. Modulator nach einem der vorangehenden Ansprüche, der eine Vielfach-Quantum-Well-Struktur umfaßt.

5. Modulator nach Anspruch 4, der eine GaAs-AlGaAs-Vielfach-Quantum-Well-Struktur umfaßt.

6. Modulator nach Anspruch 5, der eine Vielzahl von 100 Å-GaAs-Well-Einheiten und intrinsische 100 Å-$Al_{0,3}Ga_{0,7}As$ Sperrschichten umfaßt.

7. Modulator nach Anspruch 5, der eine Vielzahl von 90 Å-GaAs-Well-Einheiten und intrinsische 60 Å-$Al_{0,3}Ga_{0,7}As$ Sperrschichten umfaßt.

8. Modulator nach einem der Ansprüche 4 bis 7, bei welchem die Vielfach-Quantum-Well-Struktur intrinsische Sperrschichten mit einer Dicke ≤ 60 Å umfaßt.

9. Modulator nach einem der Ansprüche 4 bis 7, bei welchem die Vielfach-Quantum-Well-Struktur intrinsische Sperrschichten mit einer Dicke ≤ 40 Å umfaßt.

10. Modulator nach einem der Ansprüche 4 bis 9, bei welchem die Vielfach-Quantum-Well-Struktur ≤ 0,5 µm dick ist.

11. Modulator nach einem der vorangehenden Ansprüche, der einen Mehrschicht-Rückreflektor hat, der epitaktisch auf ein GaAs-$n^+$-Substrat aufgebracht wurde.

12. Modulator nach einem der Ansprüche 4 bis 11, bei welchem der Frontreflektor (6) eine Oberfläche mit einer Vielfach-Quantum-Well-Struktur aufweist.

13. Modulator nach einem der Ansprüche 4 bis 12, bei dem die Vielfach-Quantum-Well-Struktur Teil einer pin-Diode ist.

14. Modulator nach einem der vorangehenden Ansprüche, bei welchem die Reflektivität des Frontreflektors (6) kleiner als 45 % ist.

15. Verfahren zur Modulation eines optischen Signals der Wellenlänge λ, welches Verfahren die Schritte umfaßt:

(i) Anlegen des optischen Signals an einen ersten Reflektor (6) eines Fabry-Perot-Modulators (2), welcher Fabry-Perot-Modulator einen Hohlraumresonator (4), bestehend aus einem ersten Reflektor (6) und einem zweiten Reflektor (8) umfaßt, wobei der zweite Reflektor (8) eine Reflektivität hat, die wesentlich größer als die des ersten Reflektors (6) ist, wobei der Hohlraum (4) eine elektro-absorptive Vorrichtung beinhaltet, deren Absorption durch Anlegen eines elektrischen Vorspannungssignals erhöht werden kann, wobei die Reflektivität des Hohlraums am größten ist, wenn keine Vorspannung anliegt, wobei die optische Länge des Hohlraumresonators ein ungradzahliges Vielfaches von λ/4 ist; und

(ii) Anlegen eines informationsübertragenden Vorspannungssignals an den Modulator, um die Reflektivität des Hohlraums zu variieren, wodurch das optische Signal, das auf den ersten Reflektor trifft, ein reflektiertes Signal erzeugt, das Information vom besagten Vorspannungssignal überträgt.

16. Verfahren nach Anspruch 15, bei dem der Modulator gemäß einem der Ansprüche 1 bis 14 aufgebaut ist.

**Revendications**

1. Modulateur à réflexion du type Fabry-Pérot (2) comprenant une cavité résonnante (4) définie par un réflecteur antérieur (6) et un réflecteur postérieur (8) de pouvoirs réfléchissants différents, la cavité comprenant un moyen électro-absorbant, dont l'absorption à une longueur d'onde prédéterminée λ peut être augmentée par l'application d'un signal de polarisation électrique non nulle, le pouvoir réfléchissant de la cavité étant le plus grand avec une polarisation nulle, le réflecteur postérieur présentant un pouvoir réfléchissant substantiellement plus important que celui du réflecteur antérieur, caractérisé en ce que la longueur de cavité est choisie de telle sorte qu'une résonance de réflexion apparaisse à ladite longueur d'onde λ, en ce que le réflecteur antérieur (6) présente un pouvoir réfléchissant entre 0,3 et 0,45, et en ce que le pouvoir réfléchissant de la cavité à ladite longueur d'onde λ est un minimum proche de zéro avec un certain signal de polarisation appliqué, de telle sorte que le rapport entre le pouvoir réfléchissant avec une polarisation nulle et celui avec ladite certaine polarisation appliquée, est d'au moins 20 sur 1.

2. Modulateur à réflexion du type Fabry-Pérot asymétrique comprenant une cavité résonnante (4) définie par un réflecteur antérieur (6) et un réflecteur postérieur (8) de pouvoirs réfléchissants différents et comprenant un moyen électro-absorbant, dont l'absorption à une longueur d'onde prédéterminée λ peut être augmentée par l'application d'un signal de polarisation électrique non nulle, le pouvoir réfléchissant de la cavité à ladite longueur d'onde λ pouvant être commuté entre une valeur élevée avec une polarisation nulle, et une valeur faible avec une certaine polarisation non nulle, caractérisé en ce que la longueur de cavité est choisie de telle sorte qu'une résonance de réflexion apparaisse à ladite longueur d'onde λ, le pouvoir réfléchissant avec ladite polarisation non nulle ne dépassant pas 0,00242.

3. Modulateur du type Fabry-Pérot asymétrique comprenant une cavité résonnante (4) définie par un réflecteur antérieur (6) et un réflecteur postérieur (8) de pouvoirs réfléchissants différents, le réflecteur antérieur (6) étant défini par une interface qui est dépourvue de structures anti-réflexion effectives, le réflecteur postérieur (8) présentant un pouvoir réfléchissant substantiellement plus important que celui du réflecteur antérieur (6), la cavité (4) comprenant un moyen électro-absorbant dont l'absorption à une longueur d'onde prédéterminée $\lambda$ peut être augmentée par l'application d'un signal de polarisation électrique, le pouvoir réfléchissant de la cavité étant le plus grand lorsqu'elle n'est pas polarisée, caractérisé en ce que la longueur optique de la cavité résonnante (4) est un multiple impair de $\lambda/4$.

4. Modulateur selon l'une quelconque des revendications précédentes, comprenant une structure à puits quantiques multiples.

5. Modulateur selon la revendication 4, comprenant une structure à puits quantiques multiples de GaAs-AlGaAs.

6. Modulateur selon la revendication 5, comprenant une pluralité de puits de GaAs de 100 Å et de régions intrinsèques de barrière de $Al_{0,3}Ga_{0,7}As$ de 100 Å.

7. Modulateur selon la revendication 5, comprenant une pluralité de puits de GaAs de 90 Å et de régions intrinsèques de barrière de $Al_{0,3}Ga_{0,7}As$ de 60 Å.

8. Modulateur selon l'une quelconque des revendications 4 à 7, dans lequel la structure à puits quantiques multiples comporte des régions intrinsèques ≤ 60 Å d'épaisseur.

9. Modulateur selon l'une quelconque des revendications 4 à 7, dans lequel la structure à puits quantiques multiples comporte des régions intrinsèques de barrière ≤ 40 Å d'épaisseur.

10. Modulateur selon l'une quelconque des revendications 4 à 9, dans lequel la structure à puits quantiques multiples est ≤ 0,5 µm d'épaisseur.

11. Modulateur selon l'une quelconque des revendications précédentes, comprenant un empilement de réflecteurs postérieurs multi-couches mis à croître de façon épitaxiale sur un substrat $n^+$ de GaAs.

12. Modulateur selon l'une quelconque des revendications 4 à 11, dans lequel le réflecteur antérieur (6) comprend une surface de la structure à puits quantiques multiples.

13. Modulateur selon l'une quelconque des revendications 4 à 12, dans lequel la structure à puits quantiques multiples fait partie d'une diode PIN.

14. Modulateur selon l'une quelconque des revendications précédentes, dans lequel le pouvoir réfléchissant du réflecteur antérieur (6) est inférieur à 45 %.

15. Procédé de modulation d'un signal optique de longueur d'onde $\lambda$, lequel procédé comprend les étapes consistant à :

(i) appliquer le signal optique à un premier réflecteur (6) d'un modulateur du type Fabry-Pérot (2), lequel modulateur du type Fabry-Pérot comprend une cavité résonnante (4) définie par le premier réflecteur (6) et un second réflecteur (8), le second réflecteur (8) présentant un pouvoir réfléchissant substantiellement plus important que celui du premier réflecteur (6), la cavité (4) comprenant un moyen électro-absorbant dont l'absorption peut être augmentée par l'application d'un signal de polarisation électrique, le pouvoir réfléchissant de la cavité étant le plus grand lorsqu'elle n'est pas polarisée, la longueur optique de la cavité résonnante étant un multiple impair de $\lambda/4$, et
(ii) appliquer un signal de polarisation portant des informations au modulateur pour amener le pouvoir réfléchissant de la cavité à varier, d'où il résulte que le signal optique heurtant le premier réflecteur donne naissance à un signal réfléchi portant des informations provenant dudit signal de polarisation.

16. Procédé selon la revendication 15, dans lequel le modulateur est construit conformément à l'une quelconque des revendications 1 à 14.

*Fig.1.*

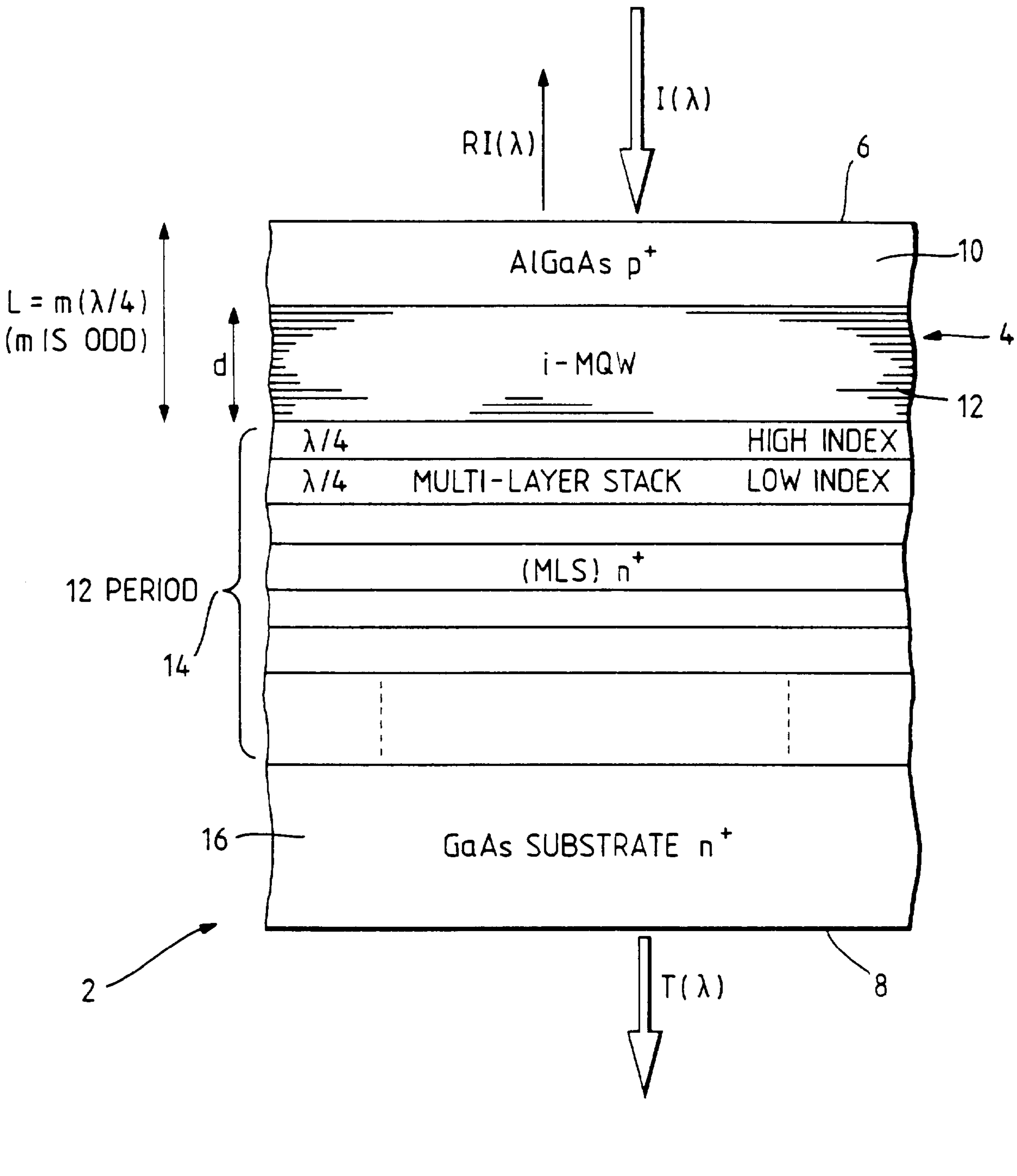
I(λ)
RI(λ)
6
AlGaAs p+
10
L = m(λ/4)
(m IS ODD)
d
i-MQW
4
12
λ/4
HIGH INDEX
λ/4
MULTI-LAYER STACK
LOW INDEX
(MLS) n+
12 PERIOD
14
16
GaAs SUBSTRATE n+
2
8
T(λ)

Fig.2.

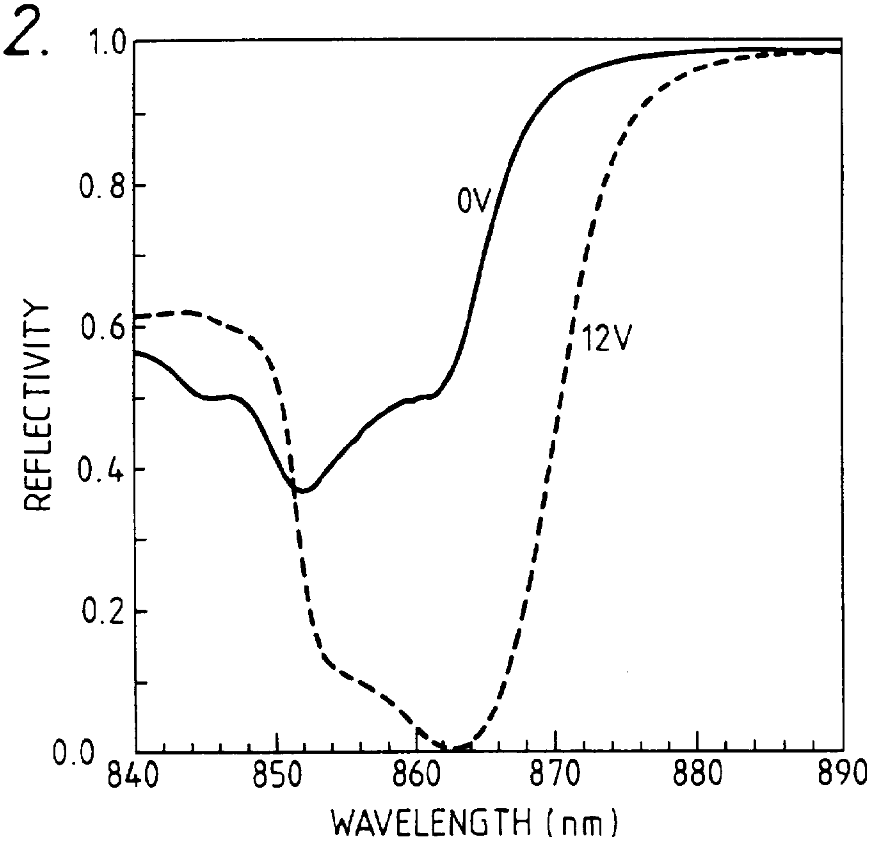
1.0
0.8
0.6
0.4
0.2
0.0
REFLECTIVITY
0V
12V
840
850
860
870
880
890
WAVELENGTH (nm)

Fig.3.

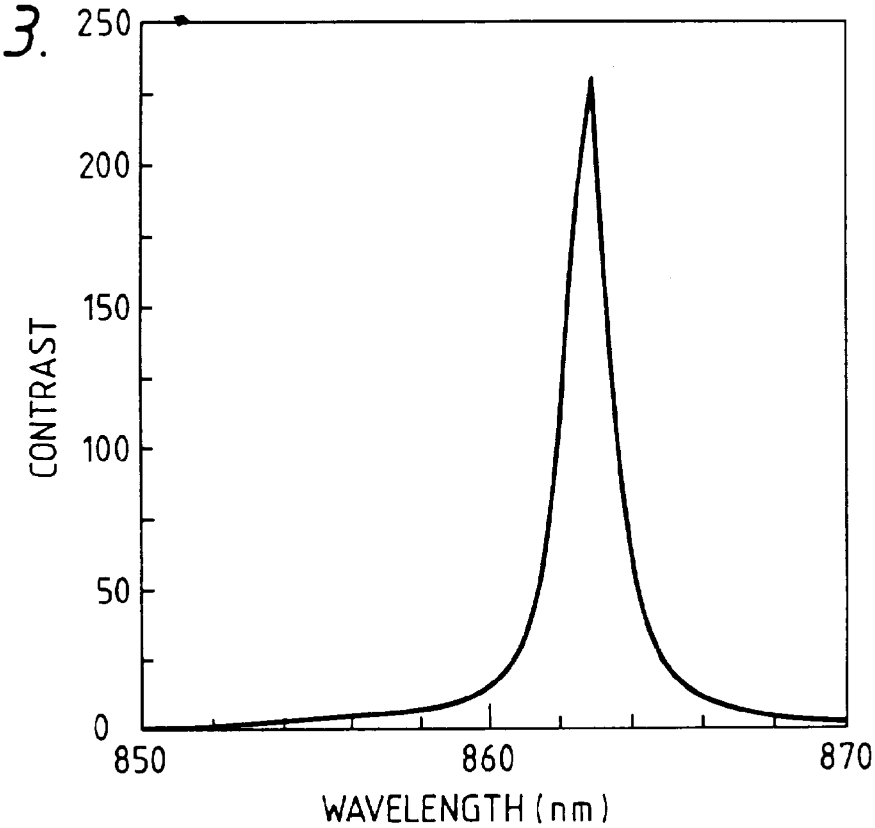
250
200
150
100
50
0
CONTRAST
850
860
870
WAVELENGTH (nm)

*Fig. 4.*

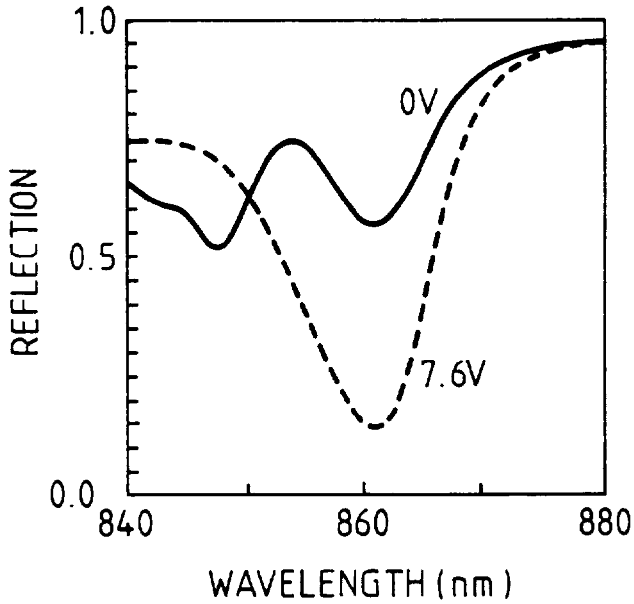


MEASURED ON:OFF REFLECTION SPECTRA FOR TEST AFPM AT OPTIMUM BIAS.

*Fig. 5.*

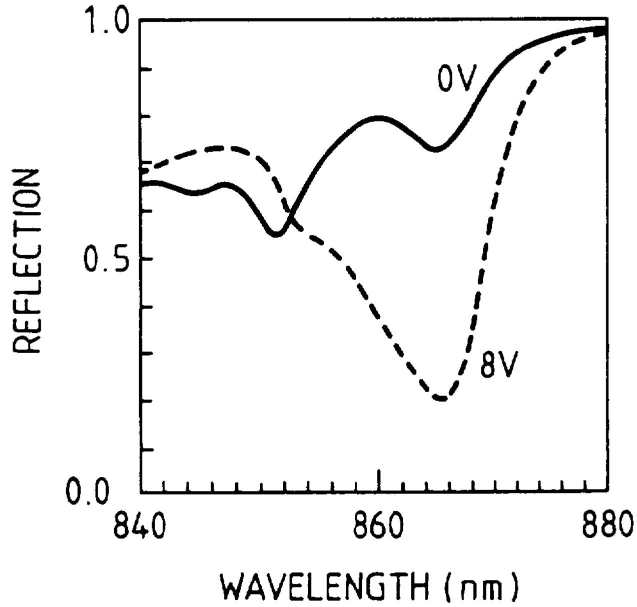


SIMULATION OF THE ON:OFF CHARACTERISTICS FOR TEST AFPM. CAVITY LENGTH IS SET SO THAT THE RESONANCE IS THE SAME DISTANCE FROM THE MQW ABSORPTION PEAK AS IN Fig. 4.

Fig.6.

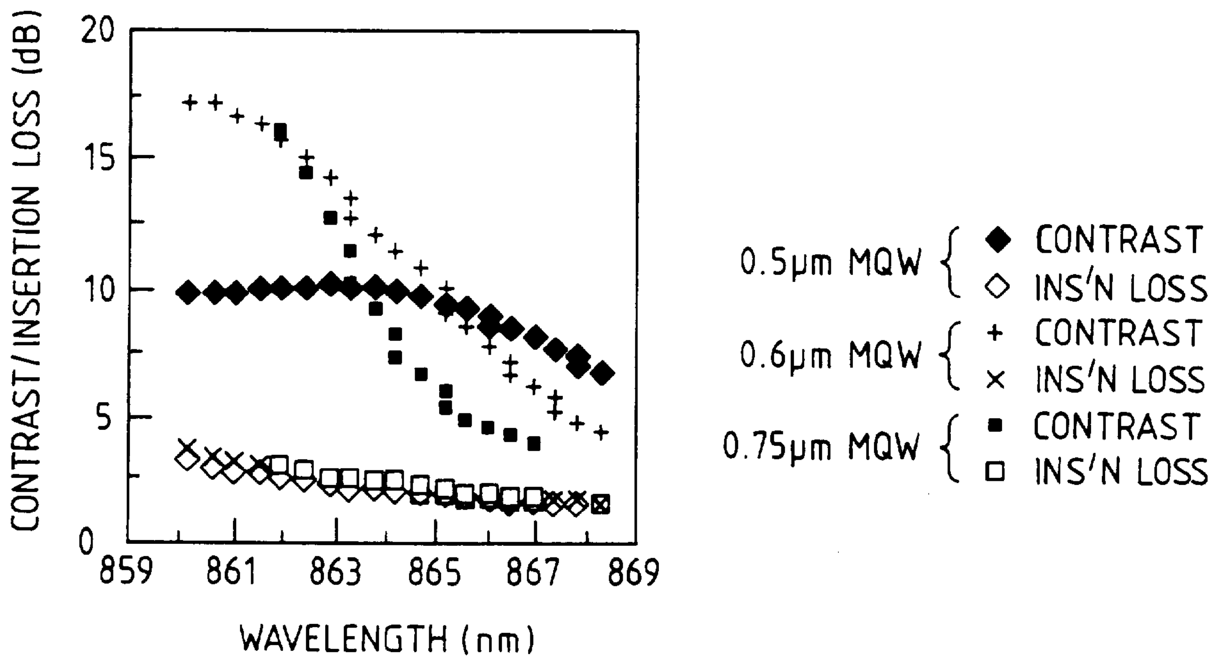


SIMULATED PERFORMANCE OF THE MODIFIED AFPM WITH $R_f = 0.45$, $R_b = 0.95$, OPERATING AT A FIXED 5V BIAS, WITH DIFFERENT MQW THICKNESSES.